(19) **Europäisches Patentamt / European Patent Office / Office européen des brevets**

(11) **EP 2 489 139 B1**

(12) **FASCICULE DE BREVET EUROPEEN**

(45) Date de publication et mention
de la délivrance du brevet:
**28.08.2013 Bulletin 2013/35**

(21) Numéro de dépôt: **10770753.1**

(22) Date de dépôt: **08.10.2010**

(51) Int Cl.:
**H04B 7/185** (2006.01)

(86) Numéro de dépôt international:
**PCT/EP2010/065090**

(87) Numéro de publication internationale:
**WO 2011/045236 (21.04.2011 Gazette 2011/16)**

(54) **DISPOSITIF ET PROCEDE DE CONTROLE DES RESSOURCES RADIO POUR SYSTEMES DE COMMUNICATIONS PAR SATELLITES**

ANORDNUNG UND VERFAHREN ZUR KONTROLLE DER FUNKMITTELN FÜR SATELLITEN KOMMUNIKATIONSANORDNUNGEN

DEVICE AND METHOD FOR RADIO RESOURCE CONTROL IN A SATELLITE COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2009 FR 0904969**

(43) Date de publication de la demande:
**22.08.2012 Bulletin 2012/34**

(73) Titulaire: **THALES**
**92200 Neuilly-sur-Seine (FR)**

(72) Inventeurs:
• **LUCIDARME, Thierry**
**F-92704 Colombes (FR)**
• **TOURET, Marc**
**F-92704 Colombes (FR)**
• **CHICHE, Lucie**
**F-92704 Colombes (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 1 983 676          EP-A2- 1 901 456**
**WO-A2-2008/074020     WO-A2-2008/093945**

EP 2 489 139 B1

**Description**

L'invention concerne un dispositif et un procédé de contrôle des ressources radio pour systèmes de communications par satellites et s'applique notamment aux domaines de la gestion des ressources radio pour les communications par satellites.

Les systèmes de communications par satellites utilisent notamment la bande de fréquence Ku allant de 12 à 14 GHz. La multiplication des systèmes ainsi que les besoins grandissants en débits des applications supportées par ce type de systèmes mènent à l'utilisation de bandes de fréquences plus hautes, telles que la bande Ka allant de 20 à 30 GHz. La ressource en fréquence étant rare et chère, les concepteurs de systèmes satellitaires ont notamment pour objectif d'utiliser ladite ressource le plus efficacement possible. A titre d'exemple, lorsqu'une bande de fréquence est allouée pour le fonctionnement d'un système donné, et que ce système permet à un nombre variable d'utilisateurs de communiquer par l'intermédiaire des satellites composant ledit système, il est intéressant de partager les ressources radio le plus intelligemment possible afin notamment d'augmenter la capacité de transmission de données numériques. A cet effet, il est possible de tenir compte des conditions de transmission et/ou de réception des différents utilisateurs du système dans le but de d'optimiser le partage de ressources. Ce partage intelligent peut être réalisé à l'aide de méthodes de contrôle de la ressource radio, désignées dans la suite de la description comme méthodes ou stratégie RRM, acronyme venant de l'expression anglo-saxonne « Radio Ressource Management ».

Différentes stratégies utilisées pour optimiser l'utilisation de la ressource radio existent dans l'état de la technique. Une de ces stratégies fréquemment utilisée aujourd'hui et est désignée par l'acronyme ACM venant de l'expression anglo-saxonne « Adaptative Coding and Modulation ». Ce type de méthode RRM permet de sélectionner en cours de communication un schéma de modulation et de codage parmi plusieurs, un schéma étant désigné par l'acronyme MCS venant de l'expression anglo-saxonne « Modulation and Coding Scheme ». Si le schéma MCS utilisé peut être modifié, la bande de fréquence occupée reste constante. Le changement de schéma MCS est fait de manière à suivre les évolutions de l'affaiblissement du signal notamment de type « fading ». Les stratégies de type ACM ne permettent pas une allocation variable de la bande de fréquence utilisée. Par conséquent, les utilisateurs n'utilisent pas de manière optimale le spectre en fonction de la qualité de la liaison. En d'autres termes, les utilisateurs consomment trop de bande passante par rapport à leurs besoins en débit, et ce au détriment des autres utilisateurs du système.

Les méthodes existantes de partage de la ressource radio dans un système de communications par satellites permettent une répartition de ladite ressource entre plusieurs utilisateurs. Néanmoins, la rareté et le coût d'utilisation des ressources en fréquence rendent nécessaire l'optimisation de ce partage à l'aide de nouvelles stratégies RRM intelligentes et d'éviter une allocation statique de ressources trop coûteuse en bande de fréquence.

voir EP-A-1901456 (Availink).

Un but de l'invention est notamment de pallier les inconvénients précités.

A cet effet l'invention a pour objet un dispositif de contrôle des ressources radio d'un système de communications par satellites, lesdites ressources radio étant employées par des équipements utilisateurs afin d'émettre et de recevoir des données numériques à l'aide de liens radio, un lien radio étant associé à un point de fonctionnement courant utilisé pour la transmission de données, un point de fonctionnement correspondant à un schéma de modulation et de codage MCS associé à une largeur de bande de fréquence B, lesdits liens étant mis en oeuvre en utilisant au moins un satellite en tant que relais de communications. Le dispositif comprend des moyens pour mémoriser un ensemble de valeurs prédéterminées du rapport porteuse sur bruit requis $(C/N)_{req}$ pour atteindre différentes valeurs de débit D, lesdites valeurs correspondant aux différents points de fonctionnement pouvant être sélectionnés pour la transmission de données, des moyens pour acquérir des mesures du rapport C/N en réception à puissance maximale correspondant aux points de fonctionnement courants des liens radio, des moyens pour déduire des valeurs acquises du rapport C/N les valeurs du rapport C/N correspondant aux points de fonctionnement autres que le point de fonctionnement courant et des moyens pour sélectionner un point de fonctionnement optimal par lien radio comme point de fonctionnement courant tel que C/N soit supérieur ou égal à $(C/N)_{req}$.

Selon un aspect de l'invention, le point de fonctionnement optimal est sélectionné tel que B soit inférieur ou égal à $B_{max}$, $B_{max}$ étant la largeur de bande maximale pouvant être allouée pour un lien radio.

Les points de fonctionnement optimaux sont sélectionnés, par exemple, tels que le débit D associé à un lien radio est sensiblement égal à une valeur cible de débit choisie.

Selon un mode de réalisation, les points de fonctionnement optimaux sont sélectionnés tels que pour un lien radio donné, la bande B dudit point de fonctionnement est minimisée.

Les valeurs du rapport C/N des points de fonctionnement autres que le point de fonctionnement courant sont déterminées, par exemple, en utilisant l'expression suivante :

$$(C/N)_i = (C/N)_{mes} + \{(C/N)_{req,mes} - (C/N)_{req,i}\}$$

dans laquelle :

$(C/N)_i$ est le rapport C/N du $i^{ème}$ point de fonctionnement parmi les points pouvant être sélectionnés ;

$(C/N)_{mes}$ est le rapport C/N mesuré (402) correspondant au point de fonctionnement courant ;

$(C/N)_{req,mes}$ est le rapport $(C/N)_{req}$ prédéterminé (401) correspondant au point de fonctionnement courant ;

$(C/N)_{req,i}$ est le rapport $(C/N)_{req}$ prédéterminé (401) correspondant au $i^{ème}$ point de fonctionnement.

Selon un autre aspect de l'invention, le dispositif comporte des moyens pour mettre en oeuvre au moins un lien radio par équipement utilisateur, ledit lien permettant de transmettre des commandes de contrôle du point de fonctionnement desdits équipements.

Le point de fonctionnement des équipements utilisateurs est, par exemple, mis à jour périodiquement.

Selon un mode de mise en oeuvre, le dispositif comporte des moyens pour acquérir des mesures de rapport C/N mesurées par les équipements utilisateurs sur les liens radio émis (104) par le dispositif et leur étant destiné.

Selon un autre mode de mise en oeuvre, le dispositif comporte des moyens pour contrôler en puissance l'émissions des équipements utilisateurs de manière à affiner la valeur du rapport C/N du ou des liens radio leurs étant associés après chaque mise à jour du point de fonctionnement de manière à ce que le rapport C/N soit sensiblement égal au rapport $(C/N)_{req}$.

L'invention a aussi pour objet un procédé de contrôle des ressources radio d'un système de communications par satellites, lesdites ressources radio étant employées par des équipements utilisateurs afin d'émettre et de recevoir des données numériques à l'aide de liens radio, un lien radio étant associé à un point de fonctionnement courant utilisé pour la transmission de données, un point de fonctionnement correspondant à un schéma de modulation et de codage MCS associé à une largeur de bande de fréquence B, lesdits liens étant mis en oeuvre en utilisant au moins un satellite en tant que relais de communications. Le procédé comporte au moins une étape de prédétermination de valeurs du rapport porteuse sur bruit requis $(C/N)_{req}$ pour atteindre différentes valeurs de débit D, lesdites valeurs correspondant aux différents points de fonctionnement pouvant être sélectionnés pour la transmission de données, une étape d'acquisition des mesures du rapport C/N en réception à puissance maximale correspondant aux points de fonctionnement courants des liens radio. Le procédé comporte aussi une étape de déduction des valeurs du rapport C/N correspondant aux points de fonctionnement autres que le point de fonctionnement courant à partir des valeurs acquises du rapport C/N. Une étape sélectionne un point de fonctionnement optimal à utiliser comme point de fonctionnement courant par lien radio tel que C/N soit supérieur ou égal à $(C/N)_{req}$.

L'invention a notamment comme avantage de permettre une utilisation optimale des équipements de communications embarqués par les satellites du système, comme par exemple les transpondeurs. De plus, elle permet de garantir une transmission numérique en provenance ou à destination d'un utilisateur dans une plage de débit ciblée. La mise en oeuvre de l'invention permet par ailleurs d'augmenter la capacité des systèmes de communications par satellites, c'est-à-dire d'augmenter le nombre d'utilisateurs dudit système pour une bande de fréquence disponible donnée.

Un autre avantage est que les ressources peuvent être allouées dynamiquement et donc mises à disposition des utilisateurs rapidement. De plus, l'invention permet une reconfiguration rapide de l'utilisation des ressources radio en cours de communication.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de système de communications par satellites ;
- la figure 2 illustre le principe d'allocation de ressources radio selon l'invention ;
- la figure 3 présente un exemple de méthode RRM de détermination itérative du point de fonctionnement ;
- la figure 4 présente un exemple de méthode RRM de détermination directe du point de fonctionnement.

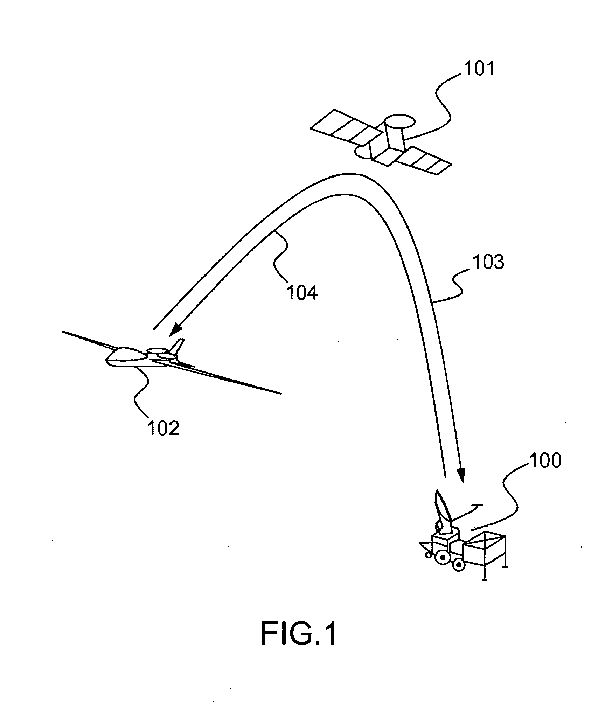

La figure 1 donne un exemple de système de communications par satellites. Ledit système comprend au moins un satellite 101. Ce satellite est par exemple géostationnaire et sert de relais de télécommunications entre au moins un équipement utilisateur 102 et un dispositif de traitement et de contrôle 100. L'équipement utilisateur 102 correspond par exemple à un aéronef, un véhicule terrestre, une station au sol, un bateau ou peut être porté à dos d'homme. L'équipement est utilisateur au sens où il utilise une partie des ressources radio disponibles du système afin de transmettre et de recevoir des données numériques. A titre d'exemple, le système peut être utilisé pour le contrôle et la collecte d'informations de missions en provenance de drones. Le dispositif de traitement et de contrôle 100 peut être terrestre, maritime ou aéroporté et a notamment deux objectifs. Un premier objectif est de recevoir et de traiter les données en provenance des équipements utilisateurs et de transmettre des données numériques à destination des équipements utilisateurs. Un second objectif est de partager les ressources radio disponibles du système entre les équipements utilisateurs. Il est également en charge de la gestion du réseau au niveau de la signalisation et de la topologie. Dans une mise en oeuvre alternative, les fonctions de transmission, de traitement des données et de partage des ressources peuvent être mises en oeuvre dans plusieurs dispositifs distincts. Le système permet également à plusieurs équipements utilisateurs de communiquer entre eux en utilisant des ressources radio leur étant allouées dynamiquement par le dispositif 100. Dans la suite de la description, des exemples de stratégie de contrôle et de partage des ressources radio sont présentés, et le dispositif 100 mettant en oeuvre ces stratégies est désigné par l'expression dispositif de contrôle.

Pour la transmission des données numériques, la mise en oeuvre de liens radio entre les équipements utilisateurs 102 et le dispositif de contrôle 100 est nécessaire. Dans la suite de la description, un lien radio 103 permettant la transmission de données numériques d'un équipement utilisateur 102 vers un dispositif de contrôle 100 est appelé lien de retour et est désigné par l'acronyme LR. Un lien radio 104 permettant la transmission de données numériques d'un dispositif de contrôle 100 vers un équipement utilisateur 102 est appelé lien direct et est désigné par l'acronyme LD. Dans la suite de la description, l'exemple de transmissions de données entre des équipements utilisateurs et un dispositif de contrôle est utilisé, mais la mise en place de liens radio permettant à plusieurs équipements utilisateurs du système de communiquer entre eux est également possible, les ressources allouées pour la mise en place de ces liens étant allouées, par exemple, par la ou les dispositifs de contrôle.

Un lien LD peut être utilisé par le dispositif de contrôle 100, par exemple, pour transmettre des commandes d'allocation de bande de fréquence à un équipement utilisateur donné et ainsi attribuer une portion de la ressource radio disponible dans le système en tenant compte des différents besoins en débit ainsi que de la qualité d'émission et de réception telle que perçue par les équipements utilisateurs du système. Ce lien peut également être utilisé pour indiquer à un équipement utilisateur donné quel est le schéma MCS à utiliser pour la transmission et/ou la réception de données numériques. La mise en oeuvre d'une stratégie RRM, par exemple au niveau du dispositif de contrôle 100, permet ainsi d'optimiser la capacité du système.

Dans la suite de la description, le cas de l'allocation des ressources radio sur les liens LR est considéré à titre non limitatif. Le contrôle de ressources radio selon l'invention peut aussi être mis en oeuvre avantageusement afin d'optimiser l'allocation de ressources sur les liens LD, lesdits liens pouvant être utilisés pour transmettre des données applicatives au même titre que les liens LR.

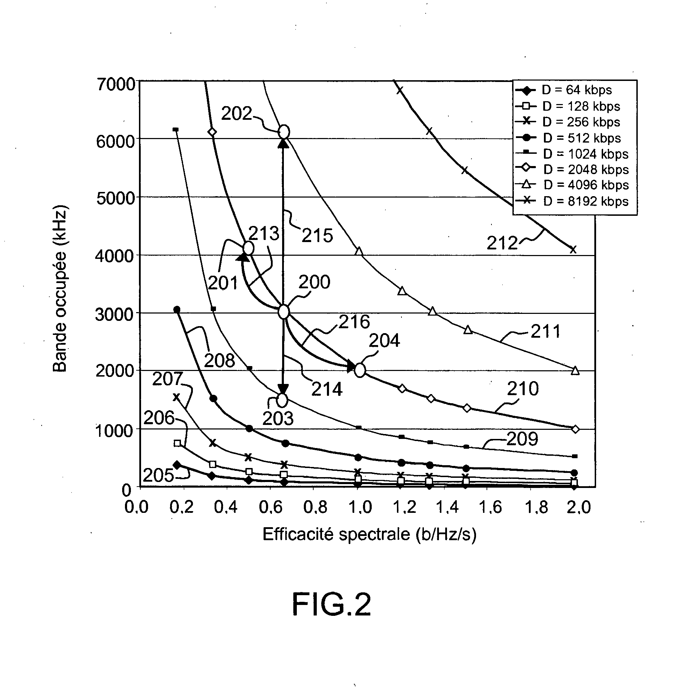

La figure 2 illustre le principe d'allocation de ressources radio selon l'invention. Les équipements utilisateurs du système comprennent des moyens tels que des modems embarqués leurs permettant d'émettre et de recevoir des données numériques. Ces modems ont la capacité de mettre en oeuvre différents schémas MCS, le schéma MCS sélectionné étant utilisé sur une bande B allouée par un dispositif de contrôle appartenant au système de communications par satellites par lequel communiquent les équipements utilisateurs. Le schéma MCS utilisé et la bande allouée peuvent varier au cours d'une communication. Comme indiqué précédemment, la sélection du schéma MCS ainsi que de la bande B à utiliser sur le lien LR est effectué, par exemple, en tenant compte de commandes de contrôle reçues sur le lien LD.

La méthode RRM selon l'invention a notamment pour objectif de tirer partie de toute la puissance disponible en émission, en d'autres termes, d'utiliser l'amplificateur de puissance de l'équipement utilisateur au plus proche de sa puissance maximale $P_{max}$, qui est par exemple la puissance maximum autorisée compte tenu de l'amplificateur de puissance de l'équipement et des normes ITU de transmission vers les satellites qui limitent cette puissance rayonnée, et d'optimiser la bande allouée tout en fournissant une valeur de débit D ciblée.

La figure 2 présente un ensemble de huit courbes correspondant à différentes valeurs possibles de débit D. Une première courbe 205 correspond à un débit D de 64 kpbs, une seconde courbe 206 correspond à un débit D de 128 kpbs, une troisième courbe 207 correspond à un débit D de 256 kpbs, une quatrième courbe 208 correspond à un débit cible de 512 kpbs, une cinquième courbe 209 correspond à un débit D de 1024 kpbs, une sixième courbe 210 correspond à un débit D de 2048 kpbs, une septième courbe 211 correspond à un débit D de 4096 kpbs et une huitième courbe 212 correspond à un débit D de 8192 kbps.

La lecture d'une de ces courbes indique que pour atteindre une valeur de débit D, associée pour une valeur d'efficacité spectrale donnée présentée en abscisse, une largeur de bande occupée, indiquée en ordonnée, est nécessaire pour permettre de se rapprocher au maximum du débit D. La méthode RRM présenté ci-après a notamment pour but de sélectionner le meilleur point appartenant à l'une de ces courbes, ledit point étant meilleur au sens où il permet d'atteindre une valeur $D_c$ de débit ciblé tout en minimisant la bande de fréquence nécessaire à la transmission des données numériques. Le point correspondant au fonctionnement courant du modem est appelé point de fonctionnement courant dans la suite de la description. Un point de fonctionnement correspond, par exemple, à un couple composé d'un schéma MCS et d'une valeur correspondant à la largeur de bande B à utiliser. La méthode RRM selon l'invention a donc pour objectif de sélectionner le meilleur point de fonctionnement possible, de manière à ce que ce dernier devienne le point de fonctionnement courant.

La bande occupée peut être exprimée, par exemple, en utilisant l'expression suivante :

$$B(\eta) = \frac{D}{\eta} \qquad\qquad (1)$$

dans laquelle :

D représente le débit exprimé, par exemple, en kilobits par seconde (kbps) ;
$\eta$ représente l'efficacité spectrale exprimée, par exemple, en bits par hertz par seconde ;
B($\eta$) représente la bande occupée exprimée, par exemple, en KiloHertz (kHz).

Le changement de schéma MCS modifie l'efficacité spectrale et permet ainsi de réduire ou d'augmenter la bande B occupée à débit D constant.

La mise en oeuvre d'une méthode permettant d'optimiser le partage de la bande de fréquence disponible dans un système de communications par satellites entre les différents équipements utilisateurs dudit système, tout en permettant de se rapprocher au maximum du débit D ciblé, peut être réalisée en une succession d'étapes, l'ordre d'exécution de ces étapes correspondant à la priorité donnée à différents critères d'allocation de ressource radio.

Il peut être choisi, par exemple, de privilégier dans un premier temps le débit afin d'atteindre une valeur de débit D ciblée. La seconde priorité peut être d'optimiser la bande occupée B, c'est-à-dire de la minimiser. Dans un troisième temps, la puissance d'émission peut être optimisée en utilisant par exemple des stratégies de contrôle de puissance.

Afin d'obtenir une valeur de débit cible lorsqu'un schéma MCS donné est utilisé, il est nécessaire de garantir un niveau suffisant de rapport porteuse sur bruit noté habituellement C/N et désignée par l'expression anglo-saxonne « Carrier-to-noise ratio ». Cette valeur dépend dans la réalité d'une valeur du rapport $E_b/N_0$ correspondant au rapport énergie par bit sur bruit. En d'autres termes, une valeur de C/N donnée appelée valeur requise et notée $(C/N)_{req}$ garantie une valeur de débit D ciblée pour un schéma MCS donné.

Le rapport $(C/N)_{req}$ est, par exemple, déterminé en utilisant l'expression suivante :

$$\left(\frac{C}{N}\right)_{req} = \left(\frac{E_b}{N_0}\right) \times \eta \qquad\qquad (2)$$

Le rapport $E_b/N_0$ dépend de la bande B et du débit D. La valeur du rapport $E_b/N_0$ est déterminée, par exemple, par une table faisant correspondre une valeur donnée du rapport $E_b/N_0$ à un couple de paramètres, le premier paramètre correspondant à une valeur de débit et le second paramètre correspondant à un schéma MCS. Pour un point de fonctionnement sélectionné, le schéma MCS et le débit ciblé D sont connus et il est donc possible de déterminer la valeur du rapport $E_b/N_0$ permettant de calculer ou de recalculer le rapport $(C/N)_{req}$.

La valeur réelle du rapport C/N du lien LR associé à un équipement utilisateur donné est mesurée par le dispositif de contrôle et cette valeur est comparée à la valeur requise $(C/N)_{req}$. Suite à cette comparaison, la méthode RRM va proposer un déplacement du point de fonctionnement. Ce déplacement du point de fonctionnement peut être déterminé de manière itérative ou directe.

Dans le cas d'une détermination itérative du point de fonctionnement, un point de fonctionnement est calculé à chaque itération, ledit point est ensuite testé, et en fonction du résultat de ce test, soit un nouveau point est recherché à l'itération suivante, soit il est considéré que l'on a convergé vers un point de fonctionnement optimal en termes de débit et de bande, et le point sélectionné est appliqué pour la transmission de données par l'équipement utilisateur.

Dans le cas d'une détermination directe du point de fonctionnement, le point de fonctionnement optimal est déterminé, par exemple, à l'aide de tables de valeurs prédéterminées.

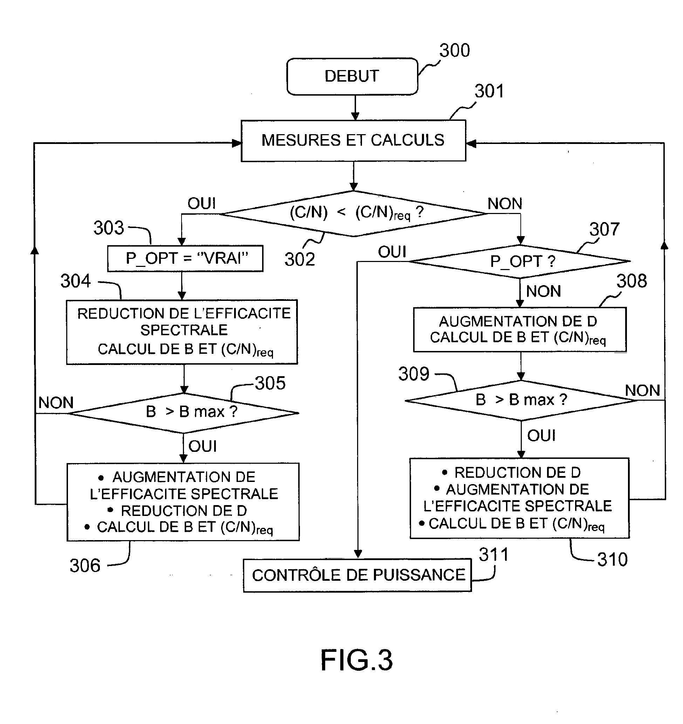

Dans la suite de la description, un exemple de mise en oeuvre de méthode RRM par détermination itérative du point de fonctionnement est décrit à l'aide des figures 2 et 3.

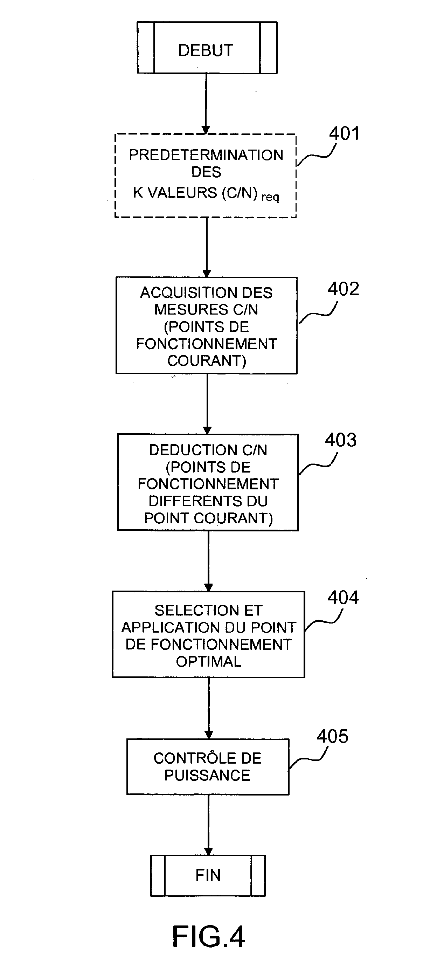

Concernant la mise en oeuvre de méthode RRM par détermination directe du point de fonctionnement, un exemple est proposé dans la description avec l'appui de la figure 4.

La figure 2 illustre, dans le cas d'une détermination itérative du point de fonctionnement, la manière dont ledit point de fonctionnement peut être mis à jour à chaque itération.

Pour une itération donnée, deux cas sont à considérer.

Le premier cas se présente lorsque l'inégalité suivante est vérifiée :

$$\frac{C}{N} < \left(\frac{C}{N}\right)_{req} \qquad (3)$$

Dans ce cas, une commande est envoyée à l'émetteur de manière à ce que celui-ci sélectionne un nouveau couple schéma MCS et bande de fréquence B pour la transmission de données. Le nouveau schéma MCS est choisi tel que celui-ci ait une efficacité spectrale moins importante que le schéma précédent, et par conséquent une bande de fréquence B plus large est nécessaire afin de garantir la valeur de débit voulue. Dans l'exemple de la figure 2, le changement de schéma MCS est accompagné d'une augmentation de la largeur de la bande de transmission, ladite largeur de bande passant de 3 MHz à 4 MHz. Le passage 213 du point de fonctionnement courant 200 à un nouveau point de fonctionnement 201 permet de diminuer la valeur du rapport $(C/N)_{req}$.

Si la bande de fréquence allouée B est plus large que la largeur de bande maximum $B_{max}$ autorisée par le système pour l'équipement utilisateur concerné, il est nécessaire de réduire cette dernière. Dans ce cas, on revient au schéma de MCS initial. On procède ensuite à une réduction de bande B qui implique alors la réduction de la bande B implique alors une diminution du débit de transmission. Concernant l'exemple de la figure 2, le passage 214 du point de fonctionnement initial 200 à un nouveau point de fonctionnement 203 implique une réduction du débit D à 1024 kbps.

Le deuxième cas se présente lorsque la condition suivante est vérifiée:

$$\frac{C}{N} > \left(\frac{C}{N}\right)_{req} \qquad (4)$$

alors le lien LR est optimisé en augmentant la largeur de bande B tout en gardant le schéma MCS courant. Le passage 215 à un nouveau point de fonctionnement 202 implique alors une augmentation de débit, comme dans l'exemple de la figure 2 où le débit passe de 2048 kbps à 4096 kbps.

Si la condition (4) est vérifiée mais que la bande occupée B est supérieure à la largeur de bande autorisée $B_{max}$, le débit D reste le même, mais le schéma MCS est modifié. Un nouveau schéma MCS présentant une efficacité spectrale plus importante est sélectionné et cette sélection permet de réduire la bande occupée. Dans l'exemple de la figure, le passage 216 à un nouveau point de fonctionnement 204 implique un changement de largeur de bande en passant de 3 MHz à 2 MHz.

La figure 3 présente un exemple de méthode RRM de détermination itérative du point de fonctionnement.

Avantageusement, le procédé 300 peut être exécuté périodiquement et/ou lorsque le point de fonctionnement a été récemment modifié. A titre d'exemple, si le procédé est exécuté périodiquement toutes les 500 ms, le point de fonctionnement est dans ce cas mis à jour tous les 40 mètres si un équipement utilisateur donné se déplace à 300 km/h.

Une première étape 301 a pour rôle de mesurer la valeur courante du rapport (C/N). La valeur requise $(C/N)_{req}$ nécessaire pour atteindre une valeur de débit D avec le schéma MCS courant et à la puissance d'émission égale à $P_{max}$. Un indicateur P_OPT, par exemple booléen, est initialisé à la valeur 'FAUX'. Les valeurs de (C/N) et de $(C/N)_{req}$ sont ensuite comparées 302.

Si (C/N) < $(C/N)_{req}$, l'indicateur P_OPT est positionné 303 à la valeur 'VRAI'. Un point de fonctionnement est calculé 304 de manière à réduire l'efficacité spectrale par sélection d'un schéma MCS différent du schéma courant. Une nouvelle valeur de la bande B et du rapport $(C/N)_{req}$ sont calculées 304, lesdites nouvelles valeurs étant les valeurs requises pour atteindre le débit cible D avec le nouveau schéma MCS.

Il est ensuite vérifié 305 si la nouvelle valeur de B est acceptable, c'est-à-dire si cette nouvelle valeur ne dépasse pas la largeur de bande maximum $B_{max}$ pouvant être allouée à l'équipement utilisateur. Si ce n'est pas le cas, le procédé boucle vers l'étape 301, précédemment décrite, de mesure et de calcul. Si c'est le cas, c'est-à-dire si B > $B_{max}$, on se repositionne sur le schéma MCS précédent 302 et on diminue la valeur du débit D ciblée 306. Les valeurs de B et de $(C/N)_{req}$ sont alors mises à jour en conséquence. Le procédé boucle ensuite vers l'étape 301, précédemment décrite, de mesure et de calcul.

Si 302 la condition (C/N) < $(C/N)_{req}$ n'est pas vérifiée, la valeur de l'indicateur P_OPT est à son tour vérifiée 307.

Si P_OPT = 'FAUX', le débit D ciblé est augmenté 308. Le schéma MCS reste le même que le schéma courant. Les valeurs de B et de $(C/N)_{req}$ sont mises à jour.

Il est ensuite vérifié 309 si la nouvelle valeur de bande B est acceptable, c'est-à-dire si cette nouvelle valeur ne dépasse pas la largeur de bande maximum $B_{max}$ pouvant être allouée à l'équipement utilisateur. Si ce n'est pas le cas, le procédé boucle vers l'étape 301 de mesure et de calcul précédemment décrite. Si c'est le cas, c'est-à-dire si B > $B_{max}$, on se repositionne sur le débit D précédent 302 et on augmente l'efficacité spectrale afin d'optimiser la bande occupée B 310.. Les valeurs de B et de $(C/N)_{req}$ sont alors mises à jour en conséquence. Le procédé boucle ensuite vers l'étape 301, précédemment décrite, de mesure et de calcul.

Lors de la vérification de la valeur de l'indicateur P_OPT 307, si P_OPT = 'VRAI', il est considéré que le point de fonctionnement déterminé est optimal au regard des conditions de propagation et des besoins en débit de l'équipement utilisateur. Une fois que l'algorithme a convergé vers un point de fonctionnement optimal utilisant une schéma $MCS_{opt}$ sur une bande $B_{opt}$, on optimise 311 la puissance transmise vers une puissance P en diminuant $P_{max}$ d'une valeur sensiblement égale à $(C/N)-(C/N)_{req}$. Ainsi, la puissance d'émission à l'antenne de l'équipement utilisateur peut être contrôlée finement en utilisant des méthodes connues de l'homme du métier. L'algorithme correspondant peut être mis en oeuvre au niveau du dispositif de contrôle, ou bien au niveau de l'équipement utilisateur.

Un second type de contrôle de puissance peut également être mis en oeuvre en parallèle, celui-ci ayant pour objectif de d'adapter la valeur de la puissance $P_{max}$ admise. Ce contrôle de puissance permet, par exemple, de compenser l'atténuation due à des phénomènes météorologiques tels que la pluie. Le principe est de compenser ces atténuations par la méthode appelée ULPC acronyme venant de l'expression anglo-saxonne « UpLink Power Control ».

L'algorithme correspondant peut être mis en oeuvre au niveau du dispositif de contrôle, ou bien au niveau de l'équipement utilisateur. La valeur par défaut de la puissance $P_{max}$ peut être exprimée, par exemple, en utilisant l'expression suivante :

$$P_{max} = \min(P, P_{ITU}) \qquad\qquad (5)$$

dans laquelle :

P est la puissance maximum atteignable par l'amplificateur de puissance utilisé en émission ;
$P_{ITU}$ est la puissance maximum autorisée par une norme comme par exemple la norme ITU.

Un contrôle de puissance de type ULPC permet par exemple de corriger la valeur de $P_{ITU}$ de manière à intégrer dans la puissance réelle transmise $P_{max}$ la connaissance que l'on a de l'atténuation due aux phénomènes météorologiques.

Ce contrôle de puissance permet, par exemple, de compenser l'atténuation due à des phénomènes météorologiques tels que la pluie. L'algorithme correspondant peut être mis en oeuvre au niveau du dispositif de contrôle, ou bien au niveau de l'équipement utilisateur, le point de fonctionnement optimal ayant été calculé à la puissance $P_{max}$.

Ce procédé RRM permet de tirer partie de toute la puissance disponible ainsi que de contrôler et d'optimiser la largeur de bande de fréquence allouée à un utilisateur tout en garantissant un débit D ciblé.

La figure 4 présente un exemple de méthode RRM de détermination directe du point de fonctionnement.

L'équipement de transmission à contrôler, par exemple un équipement utilisateur, comprend habituellement des caractéristiques matérielles lui permettant d'utiliser un nombre donné de schéma MCS avec un nombre donné de valeurs de B possibles. En d'autres termes, la transmission et/ou l'émission de données numériques peut être effectuée en utilisant un point parmi K points de fonctionnement possibles. Le point de fonctionnement peut être, par exemple, mis à jour périodiquement en exécutant une séquence d'opérations.

Une valeur du rapport $(C/N)_{req}$ peut être prédéterminée 401 pour chacun des K points de fonctionnement possibles, en utilisant par exemple l'expression (2). Ces K valeurs sont, par exemple, mémorisées au niveau du dispositif de contrôle, et ne doivent être calculées qu'une fois, par exemple lors de l'établissement des liens radio.

Le dispositif comprend par ailleurs des moyens pour mesurer ou acquérir 402 des mesures du rapport C/N correspondant au point de fonctionnement courant utilisé au niveau des liens LR à configurer. Cette détermination est effectuée, par exemple, par mesures sur des symboles pilotes associés audits liens.

Suite à ces mesures, pour chaque lien à configurer, les valeurs des rapports C/N associées aux K-1 points de fonctionnement différents du point de fonctionnement courant sont déduites 403 des valeurs acquises 402 du rapport C/N correspondant au point de fonctionnement courant des liens radio en utilisant, par exemple, l'expression suivante :

$$(C/N)_i = (C/N)_{mes} + \{(C/N)_{req,mes} - (C/N)_{req,i}\} \qquad\qquad (6)$$

dans laquelle :

(C/N)$_i$ est le rapport C/N du i$^{ème}$ point de fonctionnement parmi les K-1 points pouvant être sélectionnés ;
(C/N)$_{mes}$ est le rapport C/N mesuré correspondant au point de fonctionnement courant ;
(C/N)$_{req,mes}$ est le rapport (C/N)$_{req}$ prédéterminé correspondant au point de fonctionnement courant ;
(C/N)$_{req,i}$ est le rapport (C/N)$_{req}$ prédéterminé correspondant au i$^{ème}$ point de fonctionnement.

Le dispositif sélectionne 404 le point de fonctionnement optimal d'indice i_opt pour chaque lien LR de manière à garantir par ordre de priorité :

- que (C/N)$_{i\_opt} \geq$ (C/N)$_{req,i\_opt}$ ;
- que B $\leq$ B$_{max}$ ;
- que le débit D est maximisé ;
- que la bande B est minimisée.

Le point ainsi sélectionné est ensuite appliqué pour la transmission de données numériques s'appuyant sur chaque lien radio.
Un contrôle de puissance 405 tel que décrit précédemment dans la description peut ensuite être mis en oeuvre.

## Revendications

1. Dispositif de contrôle des ressources radio (100) d'un système de communications par satellites, lesdites ressources radio étant employées par des équipements utilisateurs (102) afin d'émettre et de recevoir des données numériques à l'aide de liens radio (103, 104), un lien radio étant associé à un point de fonctionnement courant utilisé pour la transmission de données, un point de fonctionnement correspondant à un schéma de modulation et de codage MCS associé à une largeur de bande de fréquence B, lesdits liens étant mis en oeuvre en utilisant au moins un satellite (101) en tant que relais de communications, ledit dispositif étant **caractérisé en ce qu'**il comprend des moyens pour :

   - mémoriser un ensemble de valeurs prédéterminées du rapport porteuse sur bruit requis (C/N)$_{req}$ pour atteindre différentes valeurs de débit D, lesdites valeurs correspondant aux différents points de fonctionnement pouvant être sélectionnés pour la transmission de données ;
   - acquérir des mesures du rapport C/N en réception à puissance maximale correspondant aux points de fonctionnement courants des liens radio ;
   - déduire des valeurs acquises du rapport C/N les valeurs du rapport C/N correspondant aux points de fonctionnement autres que le point de fonctionnement courant ;
   - sélectionner un point de fonctionnement optimal par lien radio comme point de fonctionnement courant tel que C/N soit supérieur ou égal à (C/N)$_{req}$.

2. Dispositif selon la revendication 1 **caractérisé en ce que** le point de fonctionnement optimal est sélectionné (404) tel que B soit inférieur ou égal à B$_{max}$, B$_{max}$ étant la largeur de bande maximale pouvant être allouée pour un lien radio.

3. Dispositif selon l'une quelconque des revendications précédentes **caractérisé en ce que** les points de fonctionnement optimaux sont sélectionnés (404) tels que le débit D associé à un lien radio est sensiblement égal à une valeur cible de débit choisie.

4. Dispositif selon l'une quelconque des revendications précédentes **caractérisé en ce que** les points de fonctionnement optimaux sont sélectionnés (404) tels que pour un lien radio donné, la bande B dudit point de fonctionnement est minimisée.

5. Dispositif selon l'une quelconque des revendications précédentes **caractérisé en ce que** les valeurs du rapport C/N des points de fonctionnement autres que le point de fonctionnement courant sont déterminées (403) en utilisant l'expression suivante :

$$(C/N)_i = (C/N)_{mes} + \left\{(C/N)_{req,mes} - (C/N)_{req,i}\right\}$$

dans laquelle :

$(C/N)_i$ est le rapport C/N du $i^{ème}$ point de fonctionnement parmi les points pouvant être séléctionnés ;
$(C/N)_{mes}$ est le rapport C/N mesuré (402) correspondant au point de fonctionnement courant ;
$(C/N)_{req,mes}$ est le rapport $(C/N)_{req}$ prédéterminé (401) correspondant au point de fonctionnement courant ;
$(C/N)_{req,i}$ est le rapport $(C/N)_{req}$ prédéterminé (401) correspondant au $i^{ème}$ point de fonctionnement.

6. Dispositif selon l'une quelconque des revendications précédentes **caractérisé en ce qu'**il comporte des moyens pour mettre en oeuvre au moins un lien radio (104) par équipement utilisateur, ledit lien permettant de transmettre des commandes de contrôle du point de fonctionnement desdits équipements.

7. Dispositif selon l'une quelconque des revendications précédentes **caractérisé en ce que** le point de fonctionnement des équipements utilisateurs est mis à jour périodiquement.

8. Dispositif selon l'une quelconque des revendications précédentes **caractérisé en ce qu'**il comporte des moyens pour acquérir des mesures de rapport C/N mesurées par les équipements utilisateurs sur les liens radio émis (104) par le dispositif et leur étant destiné.

9. Dispositif selon l'une quelconque des revendications précédentes **caractérisé en ce qu'**il comporte des moyens pour contrôler en puissance (405) l'émissions des équipements utilisateurs de manière à affiner la valeur du rapport C/N du ou des liens radio leurs étant associés après chaque mise à jour du point de fonctionnement de manière à ce que le rapport C/N soit sensiblement égal au rapport $(C/N)_{req}$.

10. Procédé de contrôle des ressources radio (100) d'un système de communications par satellites, lesdites ressources radio étant employées par des équipements utilisateurs (102) afin d'émettre et de recevoir des données numériques à l'aide de liens radio (103, 104), un lien radio étant associé à un point de fonctionnement courant utilisé pour la transmission de données, un point de fonctionnement correspondant à un schéma de modulation et de codage MCS associé à une largeur de bande de fréquence B, lesdits liens étant mis en oeuvre en utilisant au moins un satellite (101) en tant que relais de communications, ledit procédé étant **caractérisé en ce qu'**il comporte au moins :

- une étape (401) de prédétermination de valeurs du rapport porteuse sur bruit requis $(C/N)_{req}$ pour atteindre différentes valeurs de débit D, lesdites valeurs correspondant aux différents points de fonctionnement pouvant être sélectionnés pour la transmission de données ;
- une étape d'acquisition des mesures (402) du rapport C/N en réception à puissance maximale correspondant aux points de fonctionnement courants des liens radio ;
- une étape de déduction (403) des valeurs du rapport C/N correspondant aux points de fonctionnement autres que le point de fonctionnement courant à partir des valeurs acquises du rapport C/N ;
- une étape de sélection (404) d'un point de fonctionnement optimal à utiliser comme point de fonctionnement courant par lien radio tel que C/N soit supérieur ou égal à $(C/N)_{req}$.

**Patentansprüche**

1. Vorrichtung zum Steuern der Funkressourcen (100) eines Satellitenkommunikationssystems, wobei die Funkressourcen von Benutzergeräten (102) benutzt werden, um digitale Daten über Funkverbindungen (103, 104) zu senden und zu empfangen, wobei eine Funkverbindung mit einem zum Übertragen von Daten benutzten aktuellen Betriebspunkt assoziiert ist, wobei ein Betriebspunkt einem mit einer Frequenzbandbreite B assoziierten Modulations- und Codierungsschema (MCS) entspricht, wobei die Verbindungen mittels wenigstens eines Satelliten (101) als Kommunikationsrelais implementiert werden, wobei die Vorrichtung **dadurch gekennzeichnet ist, dass** sie Mittel umfasst zum:

- Speichern eines Satzes von vorbestimmten Werten des benötigten Träger-Rausch-Verhältnisses $(C/N)_{req}$ zum Erzielen unterschiedlicher Ausgangswerte D, wobei die Werte den verschiedenen Betriebspunkten entsprechen, die zum Übertragen von Daten gewählt werden können;
- Erfassen von C/N-Verhältnismesswerten beim Empfangen mit maximaler Leistung, entsprechend den aktuellen Betriebspunkten der Funkverbindungen;
- Ableiten von den erfassten C/N-Verhältniswerten der Werte des C/N-Verhältnisses, die anderen Betriebspunkten als dem aktuellen Betriebspunkt entsprechen;
- Wählen eines optimalen Betriebspunktes für jede Funkverbindung als aktuellen Betriebspunkt, so dass C/N gleich oder größer als $(C/N)_{req}$ ist.

2. Vorrichtung nach Anspruch 1, **dadurch gekennzeichnet, dass** der optimale Betriebspunkt so ausgewählt (404) wird, dass B gleich oder kleiner als $B_{max}$ ist, wobei $B_{max}$ die maximale Bandbreite ist, die für eine Funkverbindung zugeordnet werden kann.

3. Vorrichtung nach einem der vorherigen Ansprüche, **dadurch gekennzeichnet, dass** die optimalen Betriebspunkte so gewählt (404) werden, dass der mit einer Funkverbindung assoziierte Ausgang D im Wesentlichen gleich einem gewählten Zielausgangswert ist.

4. Vorrichtung nach einem der vorherigen Ansprüche, **dadurch gekennzeichnet, dass** die optimalen Betriebspunkte so gewählt (404) werden, dass für eine gegebene Funkverbindung das Band B des Betriebspunkts minimiert wird.

5. Vorrichtung nach einem der vorherigen Ansprüche, **dadurch gekennzeichnet, dass** die C/N-Verhältniswerte von anderen Betriebspunkten als dem aktuellen Betriebspunkt mit dem folgenden Ausdruck ermittelt (403) werden:

$$(C/N)_i = (C/N)_{mes} + \{(C/N)_{req.mes} - (C/N)_{req.i}\}$$

wobei:

$(C/N)_i$ das C/N-Verhältnis des $i^{ten}$ Betriebspunktes unter den wählbaren Punkten ist;
$(C/N)_{mes}$ das gemessene C/N-Verhältnis (402) ist, das dem aktuellen Betriebspunkt entspricht;
$(C/N)_{req.mes}$ das vorbestimmte $(C/N)_{req}$ Verhältnis (401) ist, das dem aktuellen Betriebspunkt entspricht;
$(C/N)_{req.i}$ das vorbestimmte $(C/N)_{req}$ Verhältnis (401) ist, das dem $i^{ten}$ Betriebspunkt entspricht.

6. Vorrichtung nach einem der vorherigen Ansprüche, **dadurch gekennzeichnet, dass** sie Mittel zum Implementieren von wenigstens einer Funkverbindung (104) für jedes Benutzergerät umfasst, wobei die Verbindung das Übertragen von Steuerbefehlen vom Betriebspunkt der Geräte zulässt.

7. Vorrichtung nach einem der vorherigen Ansprüche, **dadurch gekennzeichnet, dass** der Betriebspunkt der Benutzergeräte regelmäßig aktualisiert wird.

8. Vorrichtung nach einem der vorherigen Ansprüche, **dadurch gekennzeichnet, dass** sie Mittel zum Erfassen von von den Benutzergeräten auf den Funkverbindungen (104) gemessenen C/N-Verhältnismesswerten umfasst, die von der Vorrichtung übertragen werden und für sie bestimmt sind.

9. Vorrichtung nach einem der vorherigen Ansprüche, **dadurch gekennzeichnet, dass** sie Mittel (405) zum Regeln der Benutzergeräteübertragungsleistung umfasst, um den Wert des C/N-Verhältnisses der ein oder mehreren Funkverbindungen zu verfeinern, mit denen sie nach jeder Aktualisierung des Betriebspunkts assoziiert werden, so dass das C/N-Verhältnis im Wesentlichen gleich dem $(C/N)_{req}$ Verhältnis ist.

10. Verfahren zum Steuern der Funkressourcen (100) eines Satellitenkommunikationssystems, wobei die Funkressourcen von Benutzergeräten (102) benutzt werden, um digitale Daten über Funkverbindungen (103, 104) zu senden und zu empfangen, wobei eine Funkverbindung mit einem zum Übertragen von Daten benutzten aktuellen Betriebspunkt assoziiert ist, wobei ein Betriebspunkt einem mit einer Frequenzbandbreite B assoziierten Modulations- und Codierungsschema (MCS) entspricht, wobei die Verbindungen mittels wenigstens eines Satelliten (101) als Kommunikationsrelais implementiert werden, wobei der Verfahren **dadurch gekennzeichnet ist, dass** es wenigstens Folgendes beinhaltet:

- einen Schritt (401) des Vorbestimmens von benötigten Träger-Rausch-Verhältniswerten $(C/N)_{req}$ zum Erzielen unterschiedlicher Ausgangswerte D, wobei die Werte den verschiedenen Betriebspunkten entsprechen, die zum Übertragen von Daten gewählt werden können;
- einen Schritt (402) zum Erfassen von C/N-Verhältnismesswerten beim Empfangen mit maximaler Leistung, entsprechend den aktuellen Betriebspunkten der Funkverbindungen;
- einen Schritt (403) des Ableitens der Werte des C/N-Verhältnisses entsprechend anderen Betriebspunkten als dem aktuellen Betriebspunkt auf der Basis der erfassten C/N-Verhältniswerte;
- einen Schritt (404) des Auswählens eines optimalen Betriebspunktes, der als aktueller Betriebspunkt für jede Funkverbindung zu benutzen ist, so dass C/N gleich oder größer als $(C/N)_{req}$ ist.

## Claims

1. A device for controlling the radio resources (100) of a satellite communications system, said radio resources being used by user equipment (102) so as to transmit and receive digital data through radio links (103, 104), a radio link being associated with a current operating point used for the transmission of data, an operating point corresponding to a Modulation and Coding Scheme (MCS) associated with a frequency bandwidth B, said links being implemented using at least one satellite (101) as a communications relay, said device being **characterised in that** it comprises means for:

   - storing a set of predetermined values of the required carrier-to-noise ratio $(C/N)_{req}$ to achieve different flow values D, said values corresponding to the various operating points that can be selected for the transmission of data;
   - acquiring measurements of the C/N ratio upon reception at maximum power corresponding to the current operating points of the radio links;
   - deducing, from the acquired values of the C/N ratio, the values of the C/N ratio corresponding to operating points other than the current operating point;
   - selecting an optimal operating point per radio link as current operating point such that C/N is greater than or equal to $(C/N)_{req}$.

2. The device according to claim 1, **characterised in that** the optimal operating point is selected (404) so that B is less than or equal to $B_{max}$, $B_{max}$ being the maximum bandwidth that can be allocated to a radio link.

3. The device according to any one of the preceding claims, **characterised in that** the optimal operating points are selected (404) so that the flow D associated with a radio link is substantially equal to a selected target flow value.

4. The device according to any one of the preceding claims, **characterised in that** the optimal operating points are selected (404) so that for a given radio link the band B of said operating point is minimised.

5. The device according to any one of the preceding claims, **characterised in that** the values of the C/N ratio of operating points other than the current operating point are determined (403) using the following expression:

$$(C/N)_i = (C/N)_{meas} + \{ (C/N)_{req.meas} - (C/N)_{req.i} \}$$

   wherein:

   $(C/N)_i$ is the C/N ratio of the $i^{th}$ operating point from amongst the points that can be selected;
   $(C/N)_{meas}$ is the measured C/N ratio (402) corresponding to the current operating point;
   $(C/N)_{req.meas}$ is the predetermined $(C/N)_{req}$ ratio (401) corresponding to the current operating point;
   $(C/N)_{req.i}$ is the predetermined $(C/N)_{req}$ ratio (401) corresponding to the $i^{th}$ operating point.

6. The device according to any one of the preceding claims, **characterised in that** it comprises means for implementing at least one radio link (104) per user equipment, said link allowing the transmission of the control commands of the operating point of said equipment.

7. The device according to any one of the preceding claims, **characterised in that** the operating point of the user equipment is regularly updated.

8.  The device according to any one of the preceding claims, **characterised in that** it comprises means for acquiring C/N ratio measurements measured by the user equipment on the radio links (104) transmitted by the device and destined for them.

9.  The device according to any one of the preceding claims, **characterised in that** it comprises means (405) for controlling the power of the transmissions of the user equipment so as to refine the value of the C/N ratio of the one or more radio links with which they are associated after each update of the operating point so that the C/N ratio is substantially equal to the $(C/N)_{req}$ ratio.

10. A method for controlling the radio resources (100) of a satellite communications system, said radio resources being used by user equipment (102) so as to transmit and receive digital data through radio links (103, 104), a radio link being associated with a current operating point used for the transmission of data, an operating point corresponding to a Modulation and Coding Scheme (MCS) associated with a frequency bandwidth B, said links being implemented using at least one satellite (101) as a communications relay, said method being **characterised in that** it comprises at least:

- a step (401) of predetermining values of the required carrier-to-noise ratio $(C/N)_{req}$ to achieve different flow values D, said values corresponding to the various operating points that can be selected for the transmission of data;
- a step (402) of acquiring measurements of the C/N ratio upon reception at maximum power corresponding to the current operating points of the radio links;
- a step (403) of deducing the values of the C/N ratio corresponding to operating points other than the current operating point on the basis of the values acquired from the C/N ratio;
- a step (404) of selecting an optimal operating point to be used as current operating point per radio link such that C/N is greater than or equal to $(C/N)_{req}$.

FIG.1

FIG.2

FIG.3

```
              ┌─┬───────────┬─┐
              │ │   DEBUT    │ │
              └─┴───────────┴─┘
                     │
                     ▼
         ┌ ─ ─ ─ ─ ─ ─ ─ ─ ─ ─ ┐        401
         │  PREDETERMINATION   │
         │        DES          │
         │  K VALEURS (C/N) req │
         └ ─ ─ ─ ─ ─ ─ ─ ─ ─ ─ ┘
                     │
                     ▼
         ┌─────────────────────┐        402
         │  ACQUISITION DES     │
         │  MESURES C/N         │
         │  (POINTS DE          │
         │  FONCTIONNEMENT      │
         │  COURANT)            │
         └─────────────────────┘
                     │
                     ▼
         ┌─────────────────────┐        403
         │  DEDUCTION C/N       │
         │  (POINTS DE          │
         │  FONCTIONNEMENT      │
         │  DIFFERENTS DU       │
         │  POINT COURANT)      │
         └─────────────────────┘
                     │
                     ▼
         ┌─────────────────────┐        404
         │  SELECTION ET        │
         │  APPLICATION DU POINT│
         │  DE FONCTIONNEMENT   │
         │  OPTIMAL             │
         └─────────────────────┘
                     │
                     ▼
         ┌─────────────────────┐        405
         │  CONTRÔLE DE         │
         │  PUISSANCE           │
         └─────────────────────┘
                     │
                     ▼
              ┌─┬───────────┬─┐
              │ │    FIN     │ │
              └─┴───────────┴─┘
```

## FIG.4

**EP 2 489 139 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1901456 A